# EUROPEAN PATENT SPECIFICATION

(11) **EP 1 886 839 B1**
(45) Date of publication and mention of the grant of the patent: **13.07.2011**
(21) Application number: 07113110.6
(22) Date of filing: 25.07.2007
(51) Int. Cl.: B60B 1/06, B60T 8/32, F16D 65/02

(54) **Vehicle-wheel speed sensor attachment structure for motorcycle**
Fahrzeugradgeschwindigkeitssensor-Struktur für ein Motorrad
Structure de fixation de capteur de vitesse de roues de véhicule pour motocyclette

(30) Priority: 31.07.2006 JP 2006207433; 26.09.2006 JP 2006260470
(43) Date of publication of application: 13.02.2008
(73) Proprietor: HONDA MOTOR CO., LTD., Tokyo 107-8556 (JP)
(72) Inventor: Oba, Hiroaki, Saitama 351-0193 (JP); Honda, Yoshinobu, Saitama 351-0193 (JP); Honda, Koichiro, Saitama 351-0193 (JP)
(74) Representative: Rupp, Christian

(56) References cited:
- EP-A- 1 514 784
- JP-A- 4 256 860
- JP-A- 6 008 701
- JP-A- 60 209 301
- US-A- 4 508 392
- US-A1- 2006 066 294

## Description

The present invention relates to a vehicle-wheel speed sensor attachment structure for a motorcycle adapted to attach a sensor for detecting the locking tendency of a vehicle-wheel.

If braking is excessively applied in a motorcycle, a vehicle-wheel is likely to lock particularly on the slippery road surface or the like. To solve such a problem, an (anti-lock brake system) ABS is used in which after the locking tendency of the vehicle-wheel is detected, a control unit controls fluid pressure delivered to a caliper, thereby exhibiting a stabler braking force. One type of the ABS is a recirculation type ABS.

The recirculation type ABS mainly includes a master cylinder attached to the vicinity of a handlebar; an ABS modulator having a solenoid valve; a caliper attached to the vicinity of a wheel included in each of front and rear vehicle-wheels; and vehicle-wheel speed sensor rotors and vehicle-wheel speed sensors. The master cylinder and ABS modulator are connected to each other through a brake hose and the ABS modulator and caliper are connected to each other through a brake hose. The solenoid in the ABS modulator is operatively opened or closed by an electric signal from a control unit to switch passages through which brake fluid flows, controlling the fluid pressure of the caliper.

The vehicle-wheel speed sensor detects a rotating state (rotating speed) of the vehicle-wheel speed sensor rotor attached to the wheel and sends the detected signal to the control unit, which detects the locking tendency of the wheel. Incidentally, in the recirculation type ABS, the control unit and ABS modulator are composed as a single unit, which can exercise braking control on the front and rear vehicle-wheels.

On the other hand, the wheel is formed with an almost cylindrical wheel hub adapted to receive an axle inserted thereto. In addition, an almost cylindrical brake disk attachment portion coaxial with the wheel hub is formed with a concave groove (the vehicle-wheel speed sensor rotor attachment portion) adapted to receive the above-mentioned vehicle-wheel speed sensor rotor attached thereto.

However, the configuration of the above-mentioned wheel needs to provide the large cylindrical brake disk attachment portion and vehicle-wheel speed sensor rotor attachment portion on the external portion of the wheel hub. Therefore, it is difficult to reduce the weight of the entire wheel. Since the peripheral portion including the brake disk attachment portion and the like is larger than the entire wheel, the design performance of the entire wheel is likely to deteriorate.

A wheel hub including an improved structure for mounting at least one accessory thereto that includes a radially acting coupling arrangement including an axially outwardly directed rim portion about a periphery of the wheel hub punctuated by a plurality of recesses for receiving complementary projections on the accessory for coupling the wheel hub and accessory for rotation in unison is further disclosed in the art. See for example the document US 450 8392 A. An axially action coupling arrangement is also provided on the wheel hub for holding the accessory substantially against axial movement relative to the wheel hub.

In view of the foregoing, the present invention has been made and it is an object of the invention to provide vehicle-wheel speed sensor attachment structure for a motorcycle capable of weight reduction of the entire wheel and of enhanced design performance of the entire wheel.

In the present invention, a vehicle-wheel speed sensor attachment structure for a motorcycle includes: a wheel including a wheel hub and a plurality of spokes radially extending from the wheel hub; a brake disk attached to the wheel; and a vehicle-wheel speed sensor rotor attached to the wheel to rotate together therewith to cause a vehicle-wheel speed sensor attached to a vehicle body side to detect a wheel speed; the spokes are each formed with an attachment boss attached to the brake disk and with a reinforcing rib connecting the attachment boss and the wheel hub and the vehicle-wheel speed sensor rotor is attached to the reinforcing rib.
With this configuration, even if it is not necessary to provide the large cylindrical brake disk attachment portion and vehicle-wheel speed sensor rotor attachment portion on the external portion of the wheel hub, the brake disk can be attached to the attachment bosses and the vehicle-wheel speed sensor rotor can be attached to the reinforcing ribs.

In this case, the spoke may be formed with a concave portion substantially extending along the reinforcing rib, on a side opposite with the reinforcing rib.
With this configuration, the weight of the wheel can further be reduced by the concave portion at portions having no effect on the attachment of the brake disk and vehicle-wheel speed sensor rotor.

The reinforcing rib may be formed to have such an angle that the reinforcing rib crosses a line which radially extends so as to join the attachment boss and wheel hub.
With this configuration, the reinforcing rib can be formed longer in an extending direction than in a radial direction.

The wheel rib may bend oppositely to a rotation direction of the wheel during traveling as the wheel rib extends from the wheel hub to the attachment boss.
With this configuration, the spoke can be effectively reinforced with respect to force exerted on the attachment boss during braking.

A projection continuous with the spoke may be provided at a position which is located on the outer surface of the wheel hub on a side opposite with the reinforcing rib and which is joined to the spoke.
With this configuration, the thickness of the joint between the spoke and wheel hub can be increased.

According to the present invention, the spokes are each provided with the attachment boss adapted to attach the disk to the spoke and the vehicle-wheel speed sensor rotor is attached to the reinforcing ribs adapted to connect the wheel hub to the attachment bosses. This eliminates provision of a vehicle-wheel speed sensor rotor attachment portion on the outer circumference of the wheel hub, which can reduce the weight of the wheel. Further, since the peripheral portion of the wheel hub can be reduced in size to enhance the flexibility of design and improve external appearance (design performance).

Because of formation of the concave portion, further weight reduction can be promoted at portions having no effect on the attachment of the brake disk and vehicle-wheel speed sensor rotor.
The reinforcing rib may be formed to have such an angle that it crosses a line which radially extends so as to join the attachment boss and wheel hub. Thus, the reinforcing rib can be formed longer than a reinforcing rib that extends radially to thereby enhance the effect of reinforcement.

The wheel rib bends oppositely to a rotation direction of the wheel during traveling as the wheel rib extends from the wheel hub to the attachment boss. Thus, the spoke can be effectively reinforced with respect to force exerted on the attachment boss during braking.
In addition, the projection continuous with the spoke may be provided at a position which is located on the outer surface of the wheel hub on a side opposite with the reinforcing rib and which is joined to the spoke. Thus, the thickness of the joint between the spoke and wheel hub can be increased according to the thickness of the projection. Consequently, the strength of the joint portion can be increased.

The inventive vehicle-wheel speed sensor attachment structure is preferably used in a motorcycle which comprises: a swing arm swingably supporting a rear wheel relative to a body frame; an exhaust muffler disposed on a lateral side of the swing arm; a rear wheel brake attached to the rear wheel; and a cable or brake hose connected to the rear wheel brake and extending forwardly along the swing arm; a protection member which covers a portion, of the cable or brake hose, overlapping the exhaust muffler at least as viewed from the lateral side is supported by the swing arm. In this embodiment, a portion, of the cable or brake hose, overlapping the exhaust muffler at least as viewed from the lateral side is covered by the protection member. It is possible to prevent the thermal influence of the exhaust muffler on the cable or brake hose while disposing the cable or brake hose close to the exhaust muffler. Thus, the increased width of the vehicle including the exhaust muffler can be prevented while avoiding lowering the flexibility of the layout of the motorcycle.

Preferably, the rear wheel brake includes a brake disk rotating together with the rear wheel and a caliper body which is disposed in an opening portion provided in the swing arm so as to stride the brake disk; the cable or brake hose arranged to extend along the external surface of the swing arm is curved toward a vehicle-body-widthwise central side so as to connect with the caliper body; and the protection member is bent so as to extend along the curvature of the cable or brake hose. In such a case, since the protection member bends along the bent cable or brake hose, it is possible to reduce the thermal influence of the exhaust muffler on the cable or brake hose not only from the side but also from the lower side thereof.

According to a preferred embodiment, the swing arm is projectingly provided at an external surface thereof with a support boss adapted to support the exhaust muffler; and the protection member is provided with an upper edge bent portion interposed between the support boss and the cable or brake hose arranged to extend below the support boss. The cable or brake hose can now be protected by the upper edge bent portion of the protection member from scatters from above and from heat transmitted from the exhaust muffler to the support boss which is provided to project from the external surface of the swing arm at a position above the cable or brake hose in such a manner as to support the exhaust muffler.

Furthermore, the protection member can be attached to at least one pair of attachment boss portions provided on the swing arm so as to project therefrom, the attachment boss portions facing upper and lower external surfaces, respectively, of the brake hose. Thus, at the time of assembly or maintenance, the movement of the cable or brake hose can be restricted by at least the pair of attachment boss portions, thereby enhancing working efficiency.

In accordance with a further embodiment of the present invention, the swing arm is secured to an engine main body of an engine swingably supported by the body frame and a portion of the cable or brake hose which extends forward of the swing arm toward the engine main body is covered by a cover member supported by the engine main body. According to this embodiment, the cable or brake hose can be protected by the cover member while it is not exposed to the outside on the side of the engine main body, which makes the cable or brake hose inconspicuous, not deteriorating external appearance.

A vehicle-wheel speed sensor attachment structure for a motorcycle according to embodiments of the present invention will hereinafter be described with reference to the drawings.
Fig. 1 is a lateral views illustrating the configuration of a motorcycle according to an embodiment of the present invention.
Fig. 2 is a lateral view illustrating the outline of an ABS of the motorcycle according to the embodiment of the present invention.
Fig. 3 is an enlarged view of a front vehicle-wheel portion of the motorcycle shown in Fig. 1.
Fig. 4 is an enlarged view of the front vehicle-wheel portion of Fig. 3 with a caliper removed.
Fig. 5 is a lateral view of a front wheel as viewed from the left side of the vehicle body.
Fig. 6 is a perspective view of Fig. 5.
Fig. 7 is a cross-sectional view of the front wheel taken along line A-A of Fig. 5.
Fig. 8 is a lateral view of the front wheel of Fig. 5 as viewed from the other side (the right side of the vehicle body).
Fig. 9 is a perspective view of Fig. 8.
Fig. 10 is a perspective view illustrating a rear vehicle-wheel attachment portion as viewed from the rearward and oblique upside of the continuously variable transmission M.
Fig. 11 is a lateral view of the continuously variable transmission M as viewed from the side of the rear vehicle-wheel 42.
Fig. 12 is a lateral view illustrating a state where a rear vehicle-wheel speed sensor with a protector of Fig. 11 removed.
Fig. 13 is a lateral view of a rear wheel as viewed from the left side of the vehicle body.
Fig. 14 is a lateral view of the rear wheel of Fig. 13 as viewed from the other side (the right side of the vehicle body).
Fig. 15 is a cross-sectional view of the rear wheel of Fig. 13 taken along line B-B.
Further, Figures 16 to 20 show a preferred embodiment of a motorcycle in which the inventive vehicle-wheel speed sensor attachment structure can be used.
Fig. 16 is a right lateral view of a scooter type motorcycle.
Fig. 17 is a left lateral view of the scooter type motorcycle.
Fig. 18 is a perspective view of an engine with a cover member removed as viewed from the rightward oblique forward.
Fig. 19 is a right-hand lateral view of a power unit, a rear wheel and their vicinities.
Fig. 20 is an enlarged cross-sectional view taken along line 20-20 of Fig. 19.

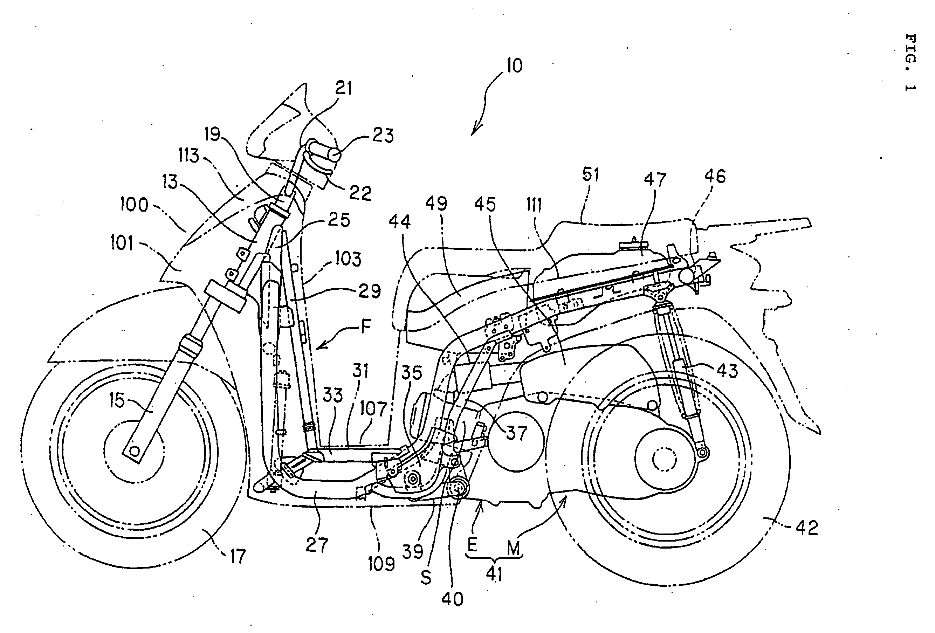

Fig. 1 is a schematic lateral view of a motorcycle according to an embodiment of the present invention. It is to be noted that in the specification the front and rear or back respectively denote front and rear or back directions as viewed from a vehicle body and the left and right respectively denote leftward and rightward directions as viewed from the vehicle body.
A scooter type vehicle 10 is provided with a head pipe 13 at the front portion of a vehicle body, namely, at the front end of a body frame F. A steering shaft not shown is rotatably connected to the head pipe 13. A front fork 15 is connected to the lower end of the steering shaft. A front vehicle-wheel 17 is connected to the lower end of the front fork 15. A handlebar post 19 is integrally joined to the upper end of the steering shaft. Handlebars 21 are connected to the upper end of the handlebar post 19. Respective handle grips 23 are attached to the leading ends of the handlebars 21.

The body frame F includes a main pipe 25, left and right side frames 27 and a center frame 29. The main pipe 25 extends downwardly from the head pipe 13. The side frames 27 extend downwardly from the middle of the main pipe 25, extending therefrom almost-horizontally toward the rearward, and further extend rearward and obliquely upwardly. The center frame 29 extends from the upper portion of the main pipe 25 toward the rearward and obliquely lower side.
In addition, the body frame F includes left and right frames 33, left and right side plates 35 and left and right rear sub-frames 37. The center frames 33 extend almost-horizontally from the lower end of the center frame 29 toward the rearward and are connected to the respective side frames 27. The side plates 35 are secured to the respective side frames 27. The rear sub-frames 37 are connected to the respective side plates 35, extending rearward and obliquely upwardly in an almost circular-arc manner, further upwardly, and are connected to the respective upper portions of the side frames 27.

A parallel link mechanism 39 is attached to the side plates 35. A power unit 41 (composed of an engine E and a continuously variable transmission M) is connected swingably upward and downward at its front lower end to the parallel link mechanism 39 via a shaft 40. A rear vehicle-wheel 42 is rotatably supported by the rear side of the power unit 41, which is supported by the rear portion of the side frame 27 via a rear cushion 43.

The engine E is e.g. a water-cooled single cylinder 4-cycle engine having a cylinder S which is slightly upwardly arranged to face the front of the vehicle body. The transmission M used is of a belt type for example. An exhaust pipe 44 adapted to lead exhaust gas from the engine E extends from the engine E, passing by the right side of the rear vehicle wheel 42, and is connected to an exhaust muffler not shown.

The respective rear ends of the left and right side frames 27 are connected by a cross member 46. A fuel tank 47 is mounted forward of the cross member 46 and a storage box 49 is mounted forward of the fuel tank 47. An occupant seat 51 is mounted to cover the fuel tank 47 and storage box 49 from above.

In the above configuration, the body frame F is covered by a body cover 100 (indicated with imaginary lines in Fig. 1) made of a synthetic resin. The body cover 100 includes a front cover 101 covering the forward of the vehicle body; an inner cover 103 which is contiguous to the front cover 101 and extends rearward of the front cover 101; a low-floor type step floor 107 contiguous to the inner cover 103; an under cover 109 covering the lower side of the step floor 107; and a side cover 111 covering the rear portion of the vehicle body from both sides.

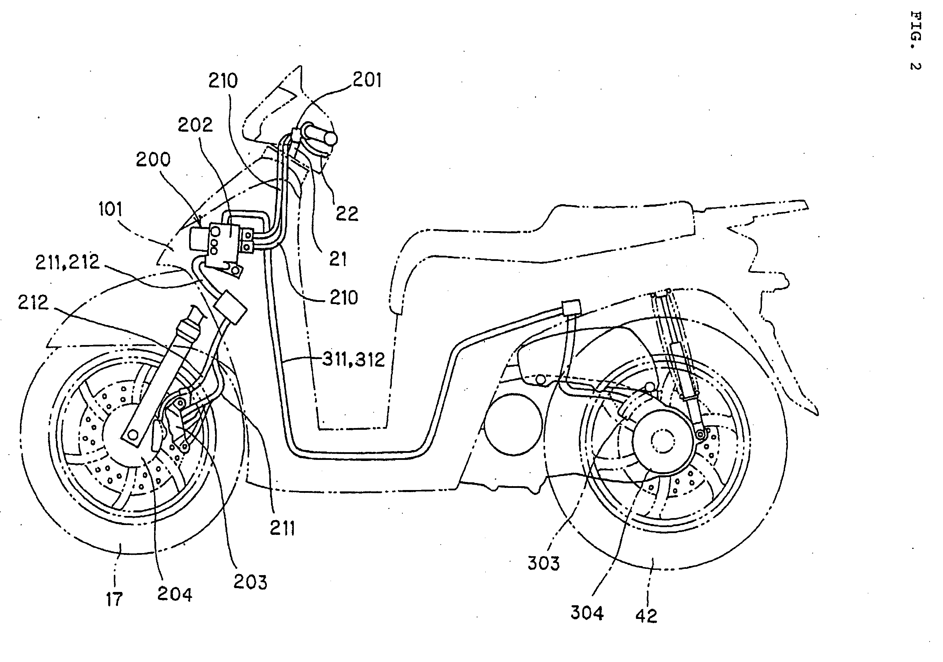

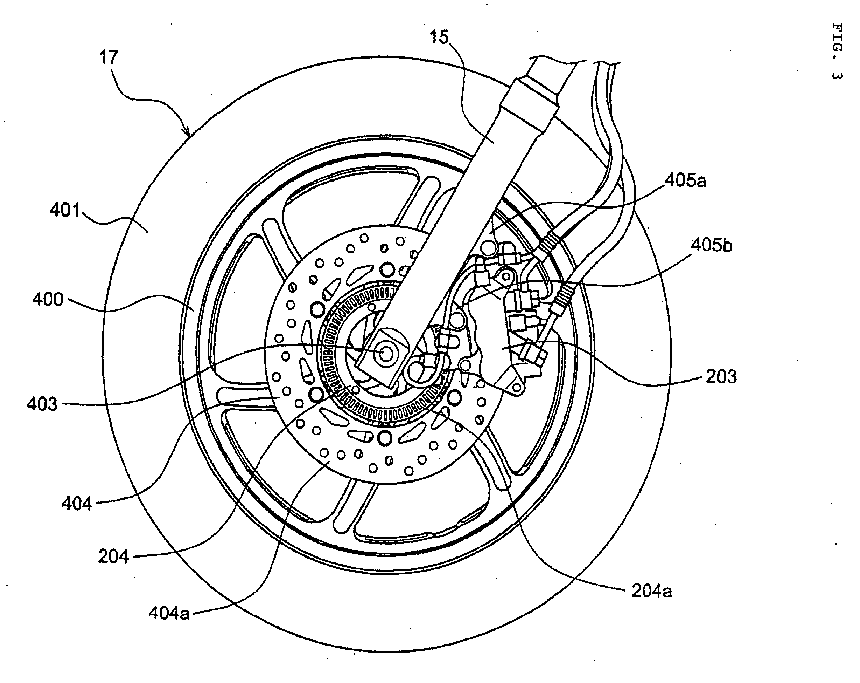

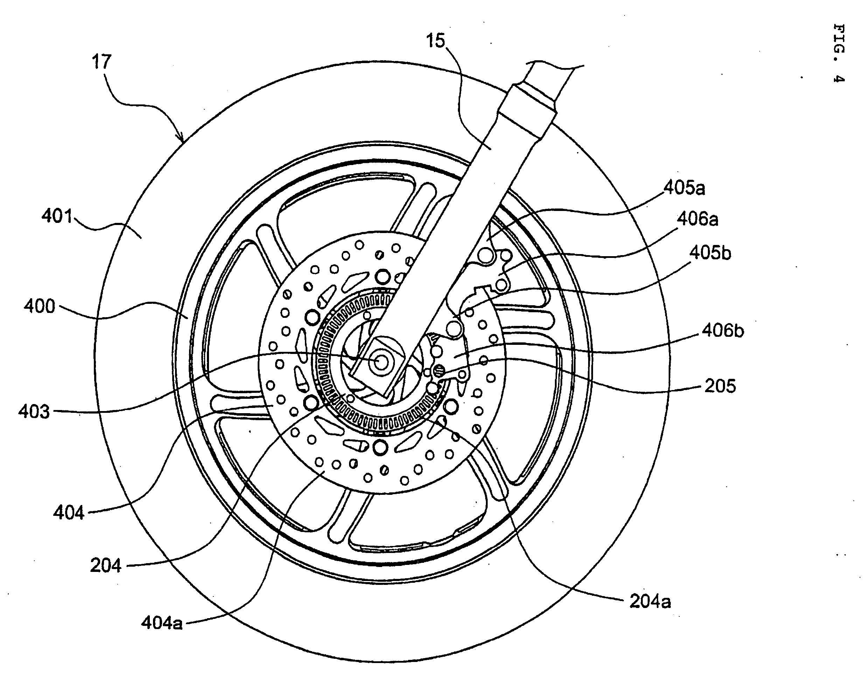

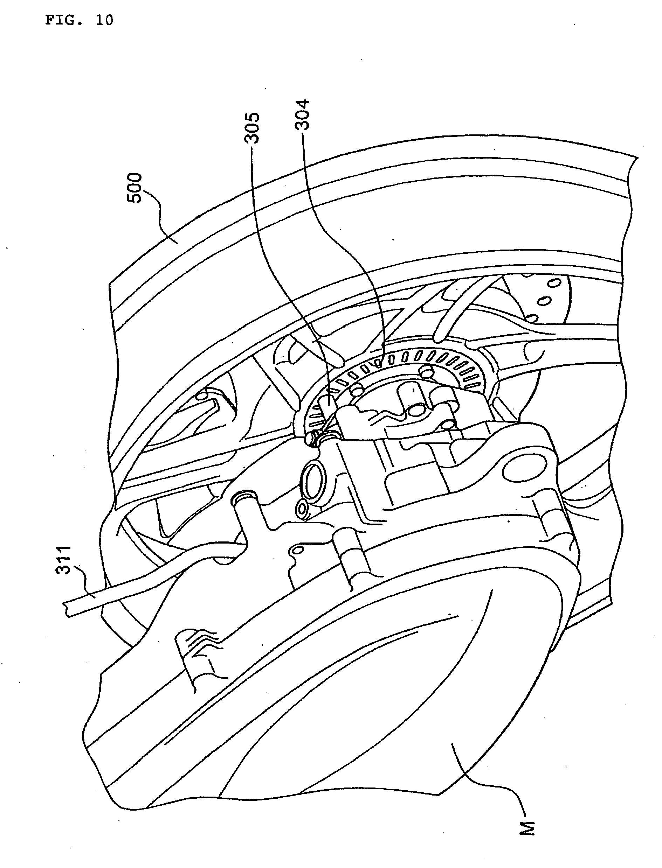

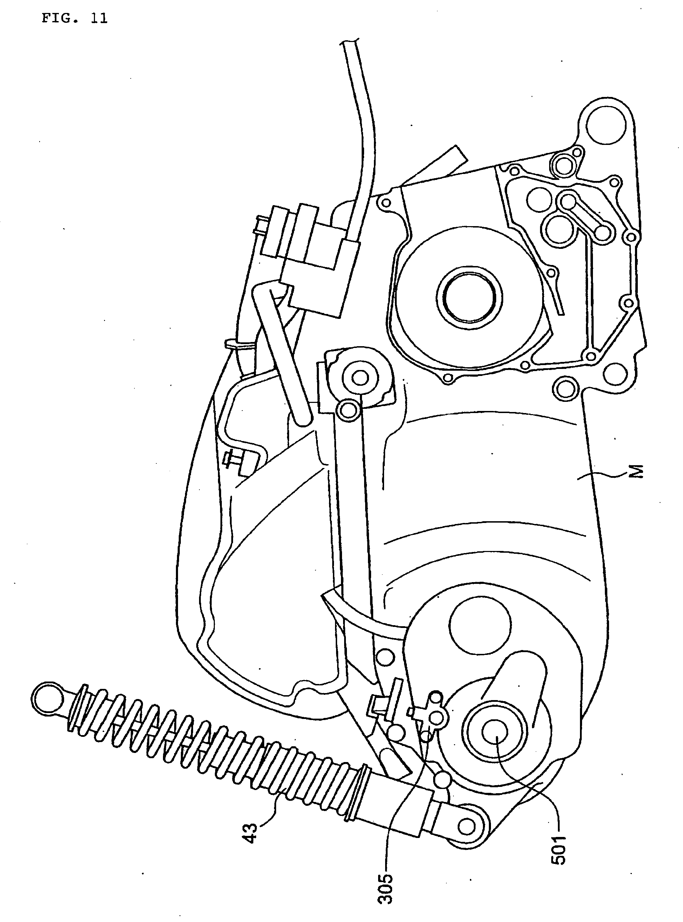

Fig. 2 is a schematic view illustrating a recirculation type ABS of the motorcycle according to the present embodiment of the invention.
The recirculation type ABS 200 for avoiding the locking tendency of a vehicle-wheel includes respective master cylinders 201 provided at the proximal ends of the left and right brake levers 22; an ABS modulator 202 attached to the front of the vehicle body; front vehicle-wheel caliper 203 and rear vehicle-wheel caliper 303 attached in the vicinities of the front vehicle-wheel 17 and rear vehicle-wheel 42, respectively; and a front vehicle-wheel speed sensor rotor 204 (see Figs. 3 and 4) and a front vehicle-wheel speed sensor 205 (see Fig. 4) for detecting the rotating states of the front vehicle-wheel 17 and a rear vehicle-wheel speed sensor rotor 304 (see Fig. 10) and a rear vehicle-wheel speed sensor 305 (see Fig. 11) for detecting the rotating state of the rear vehicle-wheel 42.

Operating the brake lever 22 causes the master cylinder 201 to change fluid pressure of brake fluid for braking. The master cylinders 201 are connected to the ABS modulator 202 via associated respective brake hoses 210, 210.
The ABS modulator 202 is located on the front side of the head pipe 13 (see Fig. 1) and on the rear side of the front cover 101 covering the front of the vehicle body. The ABS modulator 202 is connected to the front vehicle-wheel caliper 203 via a brake hose 211 and to the rear vehicle-wheel caliper 303 via a brake hole 311. In addition, the ABS modulator 202 is connected to the front vehicle-wheel speed sensor 205 via a signal line 212 and to the rear vehicle-wheel speed sensor 305 via a signal line 312.

The ABS modulator 202 described above internally includes solenoid valves capable of switching brake fluid passages connected to the respective calipers 203, 303; a plunger type pumps equipped each with a motor adapted to pressurize the brake fluid; a control unit for controlling opening and closing of the solenoid valves; and a reservoir for temporarily storing the brake fluid therein.
Upon receipt of signals from the vehicle-wheel speed sensors 205, 305, the control unit detects locking tendencies of the front vehicle-wheel and rear vehicle-wheel and controls opening and closing of the solenoid valves.
The solenoid valves are arranged as a set to separately operate the front vehicle-wheel and rear vehicle-wheel. When the signal from the control unit is turned off, the passage is open. When it is turned on, a coil is energized to cause a magnetic force to close the passage between the master cylinder and caliper.

The pumps are configured to be separate for the front vehicle-wheel brake and rear vehicle-wheel brake. The pump converts the rotational movement of a motor shaft into the reciprocating movement of a plunger to pressurize the brake fluid. The ABS modulator 202 is attached so that the rotational axis of the motor shaft of the pump faces the back and forth direction of the vehicle body.
When the fluid pressure of the brake fluid is reduced, the reservoir admits the high-pressure brake fluid on the caliper side to flow therein, thereby reducing the fluid pressure of the calipers 203, 303.

With this configuration, if operating the brake lever 22 brings the vehicle-wheels into locking tendency, when detecting a reduction in vehicle-wheel speed based on the signal from the vehicle-wheel speed sensor 205, the ABS 200 operates the solenoid valves to lower the brake fluid pressure of the calipers 203, 303. Then, the recovery of the wheel speed is awaited while keeping the lowered brake fluid pressure of the calipers 203, 303 constant. After detecting sufficient recovery of the vehicle-wheel speed and therefore avoidance of the locking tendency on the basis of the signal of the vehicle-wheel speed sensor 205, the ABS 200 increases the brake fluid pressure to recover a braking force. In this way, the ABS modulator 202 can avoid the locking tendency of the vehicle-wheel with the braking force ensured by causing the brake fluid pressure to repeat the cycle of pressure reduction, pressure maintenance and pressure rising.

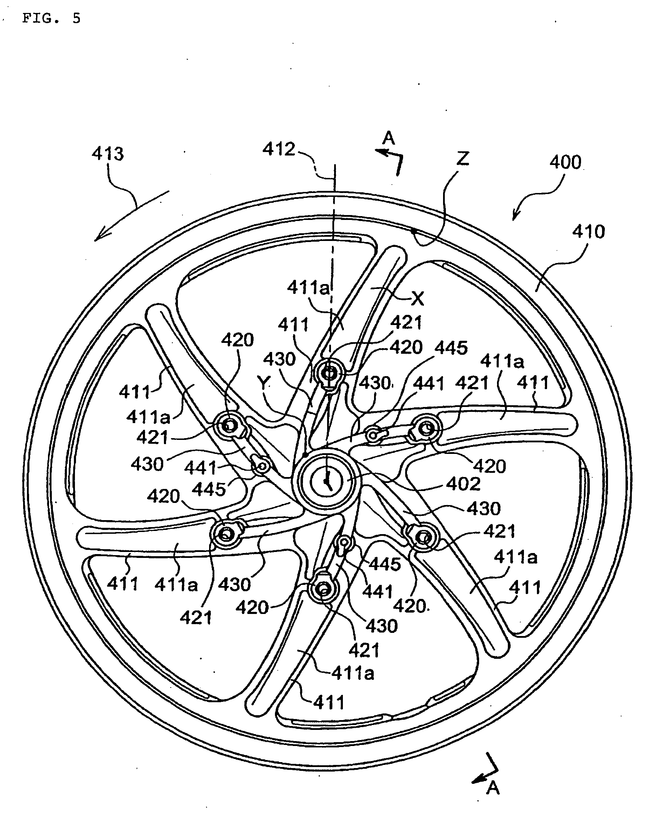

Fig. 3 is an enlarged view of the front vehicle-wheel portion of the motorcycle shown in Fig. 1. Fig. 4 illustrates the front vehicle-wheel portion with the caliper removed from the state of Fig. 3.
Referring to Fig. 3, the front vehicle-wheel 17 is configured by attaching a tire 401 to the outer circumference of a front vehicle-wheel-use wheel or front wheel 400. A wheel hub 402 (see Fig. 5 for details) is formed at the rotational center of the front wheel 400. The wheel hub 402 is adapted to receive an axle 403 inserted thereto, the axle 403 being provided to be spanned between the left and right front forks 15. The brake disk 404 and vehicle-wheel speed sensor rotor 204 are provided on the left-hand lateral surface of the front wheel 400. The brake disk 404 and vehicle-wheel speed sensor rotor 204 are attached to be coaxial with the rotational axis of the front wheel 400 and are rotated together with the front wheel 400. The vehicle-wheel speed sensor rotor 204 is formed with a plurality of holes 204a spaced circumferentially apart from each other.

The caliper 203 is provided on the front fork 15 on the left side of the vehicle body. The caliper 203 grips on both sides the sliding surface 404a of the brake disk 404 bored with a plurality of holes to generate a braking force. The caliper 203 is attached to two attachment portions 405a and 405b projecting from the front fork 15 rightward and obliquely downward as shown in Fig. 4 via respective attachment brackets 406a and 406b. The sliding surface 404a of the brake disk 404 and the frictional member surface of the caliper 203 are adjusted to have a prescribed interval therebetween and be almost parallel to each other.

The vehicle-wheel speed sensor 205 is attached to the attachment bracket 406b at a position facing the plurality of holes 204a of the vehicle-wheel speed sensor rotor 204. The vehicle-wheel speed sensor 205 is designed to detect the wheel speed (rotating state) of the front vehicle-wheel 17 based on the number of the holes of the vehicle-wheel speed sensor rotor 204 passing by the vehicle-wheel speed sensor 205, the vehicle-wheel speed sensor rotor 204 rotating together with the front wheel 400.

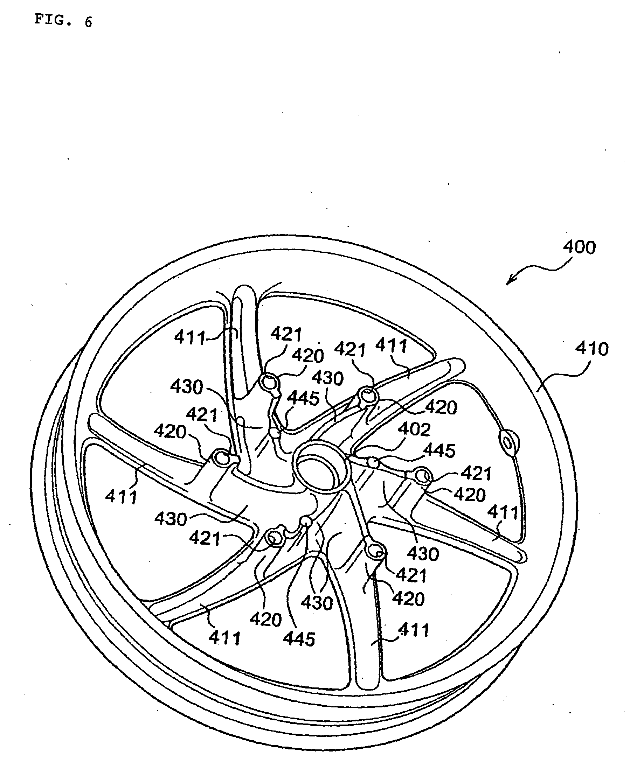

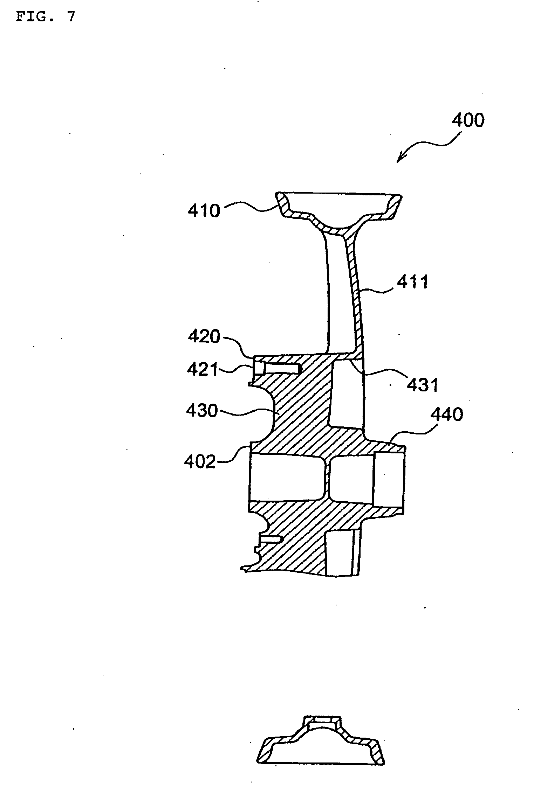

Fig. 5 is a lateral view of the front wheel 400 as viewed from the left side of the vehicle body and Fig. 6 is a perspective view of Fig. 5. Fig. 7 is a cross-sectional view taken along line A-A of Fig. 5.
The front wheel 400 mainly includes a rim portion 410 constituting an outer circumferential portion; the wheel hub 402 adapted to receive the axle 403 (see Figs. 3 and 4) inserted thereinto; and six spokes 411. The spokes 411 extend from the outer circumferential portion of the wheel hub 402 to the inner circumferential portion of the rim portion 410 and are arranged to be circumferentially spaced apart from each other. Incidentally, arrow 413 of Fig. 5 denotes the rotation direction of the front wheel 400 during traveling.

Referring to Figs. 6 and 7, the rim portion 410 is formed with a circumferentially continuous groove. The cross-section of the rim portion 410 is formed like a bowl having a body-widthwise central concave portion. The tire 401 is attached to the rim portion 410 to cover this bowl portion.

Referring to Figs. 5 to 8, the spoke 411 is longitudinally formed to have such an angle that it crosses a normal line 412 radially extending from the wheel hub 402. The spoke is more detailed with reference to Fig. 5. A spoke X (a spoke located uppermost) specified for exemplification in Fig. 5 has a proximal end Y located at the outer circumferential portion of the wheel hub 402 and on the left side of the normal line 412 and a distal portion Z located at the inner circumferential portion of the rim portion 410 and on the right side of the normal line 412. Thus, the spoke 411 has such an angle as to cross an arbitrary normal line 412 drawn from the wheel hub 402 for instance. The spoke X is formed to curve opposite to the rotation direction 413 (to curve or expand in the rotation direction) as it extends from the wheel hub 402 to the rim portion 410. As shown in Fig. 5, the spoke 411 is thick at the proximal portion Y and is tapered as it goes from the proximal portion Y to the distal portion Z.
Each of the six spokes 411 shown in Fig. 5 has the same positional relationship as that of the specified spoke X in terms of the relationship between the rim portion 410 and wheel hub 402 and has the same shape as that of the spoke X.

Referring again to Fig. 5, the six spokes 411 are each formed with an attachment boss 420 at a position close to the longitudinally intermediate portion thereof and on the side of the proximal portion. The attachment boss 420 projects from the left side surface 411a of the spoke 411 toward the left side of the vehicle body as shown in Fig. 6. The six attachment bosses 420 are arranged to draw a circle around the wheel hub 402. The attachment boss 420 is formed at its end with an internal thread hole 421 bored almost parallel to the projecting direction of the attachment boss 420. On the other hand, the brake disk 404 is formed with an attachment hole almost coincident with the position of the thread hole 421. The brake disk 404 is fastened to the front wheel 400 by fastening the attachment holes to the corresponding thread holes 421 with fastening members.

The spoke 411 is formed with a reinforcing rib 430 respectively extending from the wheel hub 402 to the attachment boss 420. The reinforcing rib 430 projects from the left side surface 411a of the spoke 411 toward the left side of the vehicle body in the same direction as that of the attachment boss 420 as shown in Fig. 6. The reinforcing rib 430 has a projection height slightly lower than the height of the attachment boss 420.

The longitudinal shape of the reinforcing rib 430 is described using the spoke X of Fig. 5. The reinforcing rib 430 extends from the proximal portion Y to the attachment boss 420 to longitudinally form the same curve shape as that of the spoke X. With such a curve shape, even if the braking force applied to the attachment boss 420 is applied to the tangential direction of the circle drawn by the six attachment bosses 420, the tangential direction and the reinforcing rib 430 form an obtuse angle therebetween to increase the section modulus of the spoke X. This provides a structure resistive to bending stress.
Each of the six reinforcing ribs 430 shown in Fig. 5 has the same positional relationship as that of the reinforcing rib of the specified spoke X in terms of the relationship between the rim portion 410 and wheel hub 402 and has the same shape as that of the reinforcing rib of the spoke X.

As shown in Figs. 5 and 6, the circumferentially alternate three reinforcing ribs 430 of the six reinforcing ribs 430 are each formed with an attachment seat 445 at its longitudinally central portion. This attachment seat 445 is formed with an internal thread hole 441 as with the attachment boss 420. With this configuration, the disklike vehicle-wheel speed sensor rotor 204 is attached to the three thread holes 441 with fastening members such as screws.

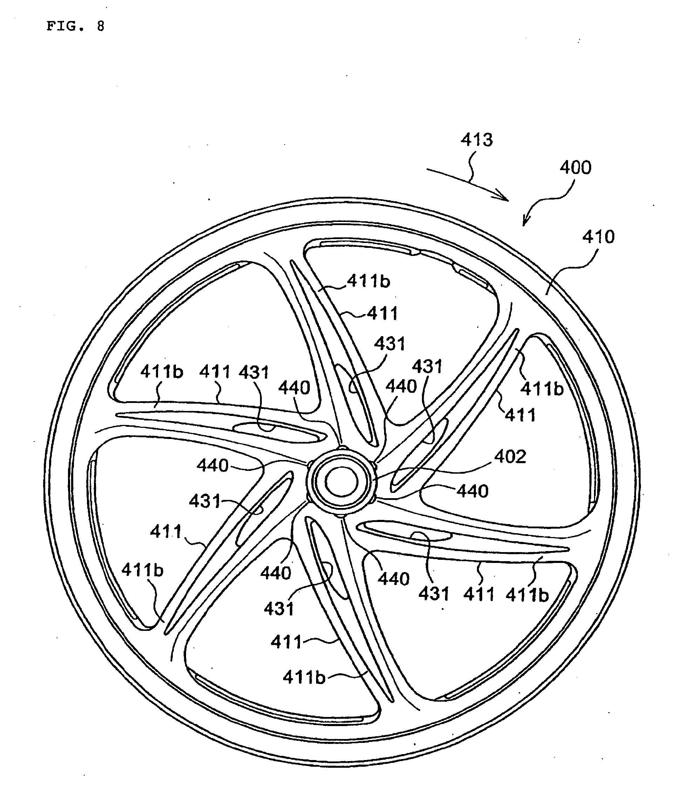

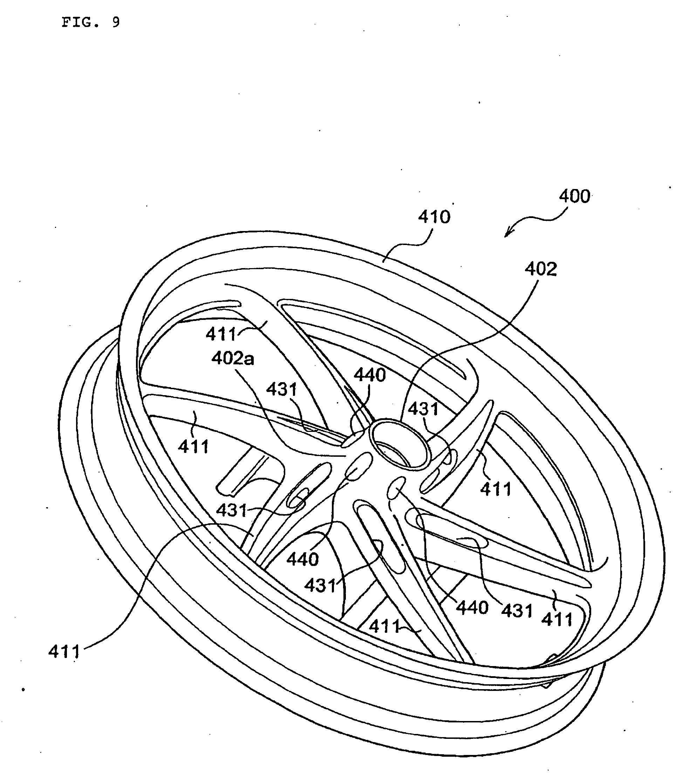

Fig. 8 illustrates the front wheel 400 of Fig. 5 as viewed form the other side (on the right side of the vehicle body) and Fig. 9 is a perspective view of Fig. 8.
The right side surfaces 411b of the six spokes 411 are each formed with a concave portion 431 substantially extending along the longitudinal direction of the reinforcing rib 430 at a position on the opposite side of the reinforcing rib 430 as shown in Figs. 8 and 9.

As shown in Figs. 8 and 9, the wheel hub 402 projects from the right side surface of the front wheel 400 toward the right side direction of the vehicle body. The outer circumferential surface 402a of the wheel hub 402 is formed with a plurality of projections 440 contiguous to the corresponding spoke 411 at respective positions joined to the corresponding spokes 411. The projections 440 radially projects from the outer circumferential surface of the wheel hub 402 and extend along the axis of the wheel hub 402. In addition, the projections 440 are arranged on the outer circumferential surface of the wheel hub 402 so as to be spaced apart from each other.

On the side of the rear vehicle wheel 42 of the motorcycle shown in Fig. 1 is next described. Fig. 10 is a perspective view illustrating a rear vehicle-wheel attachment portion as viewed from the rearward and oblique upside of the continuously variable transmission M.
Referring to Fig. 10, the rear vehicle wheel 42 is partially hidden by the transmission M located on the left side of the vehicle body. As with the front vehicle-wheel 17, the rear vehicle-wheel 42 includes a rear vehicle-wheel-use wheel or rear wheel 500, a tire (not shown), the rear vehicle-wheel speed sensor rotor 304, and a brake disk (not shown). The rear wheel caliper 303 (see Fig. 2) and the rear vehicle-wheel speed sensor 305 are attached on the vehicle body side near the rear vehicle wheel 42.
The rear vehicle-wheel speed sensor rotor 304 has the same configuration as that of the front vehicle-wheel speed sensor rotor 204 and is formed with a plurality of holes spaced circumferentially apart from each other.

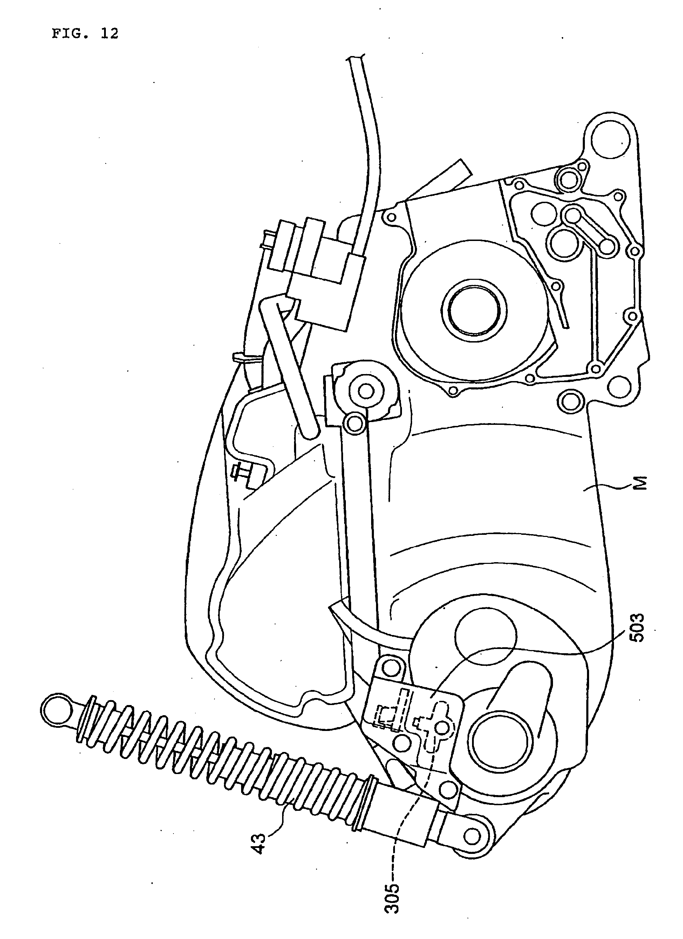

Fig. 11 is a lateral view of the continuously variable transmission M as viewed from the side of the rear vehicle-wheel 42.
The rear vehicle-wheel speed sensor 305 is attached to the crank-transmission case of the transmission M, specifically, to a position above the rear axle 501 as shown in Fig. 11. The rear vehicle-wheel speed sensor 305 is usually protected by a protector 503 attached thereto as shown in Fig. 12.
The positional relationship between the rear vehicle-wheel speed sensor 305 and the rear vehicle-wheel speed sensor rotor 304 are the same as that of the front vehicle-wheel. That is to say, the vehicle-wheel speed sensor 305 is attached at a position opposite to a plurality of holes of the vehicle-wheel speed sensor 304 so as to be spaced at a prescribed gap therebetween. The method of detecting the wheel speed (rotating state) is the same as that of the front vehicle-wheel.

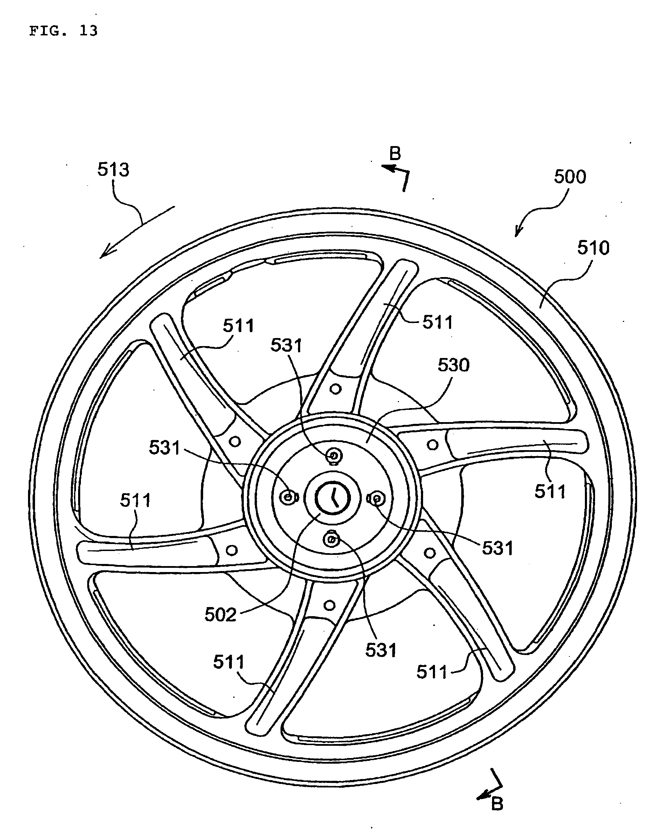

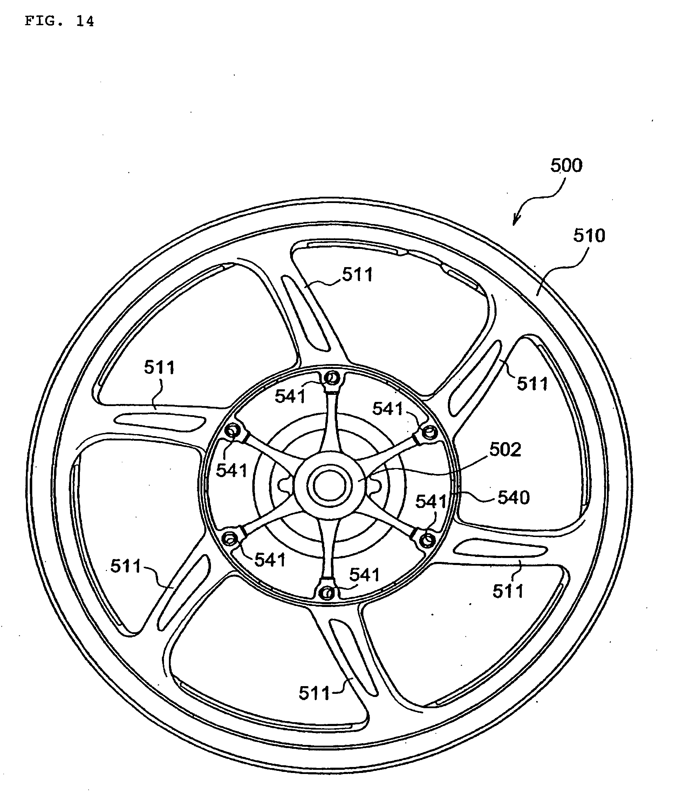

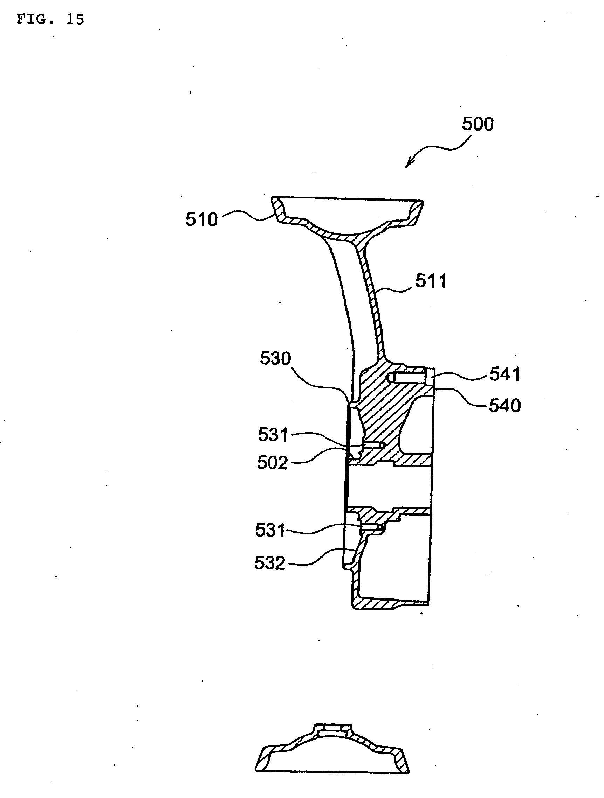

Fig. 13 is a lateral view of the rear wheel 500 as viewed from the left side of the vehicle body. Fig. 14 is a lateral view of the rear wheel 500 of Fig. 13 as viewed from the other side (on the right side of the vehicle body). Fig. 15 is a cross-sectional view of the rear wheel 500.
As with the front wheel 400, the rear wheel 500 includes a rim portion 510 constituting an outer circumferential portion; the wheel hub 502 adapted to receive the rear axle 501 (see Figs. 11 and 12) inserted thereinto; and six spokes 511. The spokes 511 extend from the outer circumferential portion of the wheel hub 502 to the inner circumferential portion of the rim portion 510 and are arranged to be circumferentially spaced apart from each other.

A description is here made of the differences between the front wheel 400 and the rear wheel 500. The rear wheel 500 is formed with a vehicle-wheel speed sensor rotor attachment portion 530 as shown in Fig. 13 and with a brake disk attachment portion 540 as shown in Fig. 14. The rear wheel 500 is hidden by the crank-transmission case of the continuously variable transmission M as described above. The rear wheel 500 is less free from design problem. Thus, the vehicle-wheel speed sensor rotor attachment portion 530 and brake disk attachment portion 540 are attached so as to ensure sufficient strength. The rear wheel 500 is provided with the vehicle-wheel speed sensor rotor attachment portion 530 and brake disk attachment portion 540 so that it is not formed with the attachment boss 420 and the reinforcing rib 430 unlike the front wheel 400.

Referring to Figs. 13 and 15, the vehicle-wheel speed sensor rotor attachment portion 530 is formed like a pedestal having a larger diameter than the wheel hub 502. In addition, the vehicle-wheel speed sensor rotor attachment portion 530 is formed with a circumferentially continuous groove portion 532 as shown in Fig. 15. The groove portion 532 is formed in its bottom surface with four thread holes 531. With this configuration, the rear vehicle-wheel speed sensor rotor 304 is received in and attached to the groove portion 532 with fastening members such as screws.

Referring to Figs. 14 and 15, the brake disk attachment portion 540 is formed like a pedestal having a larger diameter than the speed sensor rotor attachment portion 530. This attachment portion 540 is formed with six thread holes in its vertical surface. With this configuration, the brake disk (not shown) is attached to the brake disk attachment portion 540 with fastening members such as screws.

With the vehicle-wheel speed sensor attachment structure of the motorcycle according to the present embodiment of the invention, the attachment bosses 420 adapted to attach the disk thereto are provided on the spokes 411 and the vehicle-wheel speed sensor rotor 204 is attached to the reinforcing ribs 430 connecting the wheel hub 402 to the attachment bosses 420. Therefore, it is unnecessary to provide the vehicle-wheel speed sensor rotor attachment portion on the outer circumference of the wheel hub 402. This can reduce the weight of the front wheel 400. The peripheral portion of the wheel hub 402 becomes small so that the flexibility of design is enhanced and exterior appearance (design performance) can be enhanced.

The formation of the concave portions 431 further promotes weight reduction at portions having no effect on the attachment of the brake disk 404 and vehicle-wheel speed sensor rotor 204.
The reinforcing rib 430 is formed to have such an angle that it crosses a line which radially extends so as to join the attachment boss 420 and wheel hub 402. Thus, the reinforcing rib 430 can be formed longer than a reinforcing rib 430 that extends even radially, thereby enhancing a reinforcing effect.

The reinforcing rib 430 bends oppositely to the rotation direction 413 of the wheel during traveling as it extends from the wheel hub 402 to the attachment boss 420. Thus, the spoke 411 can be effectively reinforced in the direction opposite to the direction of the force exerted on the attachment boss 420 during braking.
The projection 440 continuous with the spoke 411 is formed at a position which is located on the external side surface of the wheel hub 402 on a side opposite with the reinforcing rib 430 and is connected to the spoke 411. Thus, the wheel hub 402 can be increased in thickness at portions thereof joined with the corresponding spokes 411 according to the height of the projection 440, thereby increasing the strength of the joint.

The preferred embodiment of the invention has been described thus far. However, the present invention is not limited to this embodiment and can be modified or altered in various ways based on the technical concept of the present invention.
In the present embodiment, the vehicle-wheel speed sensor rotors 204, 304 are described which are configured as the disk formed with the plurality of holes. However, any rotor structure may be applicable as long as it can be used to detect vehicle-wheel speed. For instance, in Patent Document 1 exemplified as the conventional art, the sensor rotor is attached to the lateral wall surface of the concave groove formed on the outside of the wheel hub. However, the same sensor rotor can be attached to the lateral wall surface of the reinforcing rib 430 by using the technical concept of the present invention.

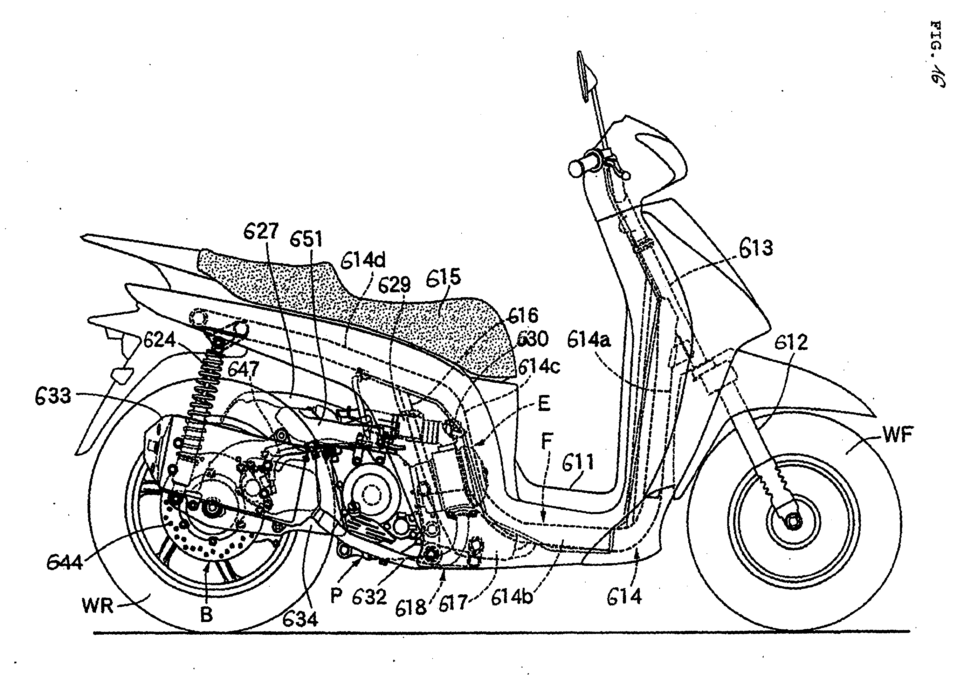

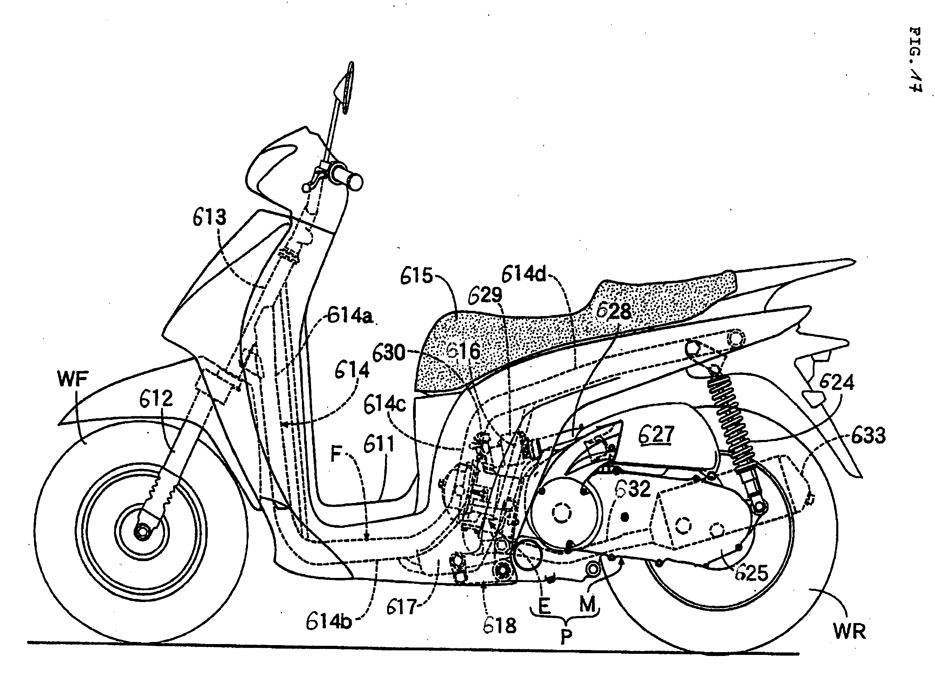

With reference to Figures 16 to 20, a preferred embodiment of a motorcycle is described in the following in which the above-described inventive vehicle-wheel speed sensor attachment structure can be used. For simplicity reasons, however, the elements of the vehicle-wheel speed sensor attachment structure are not further discussed in this embodiment.
Referring first to Figs. 16 and 17, a body frame F of a scooter type motorcycle having a low-floor type floor 611 includes a head pipe 613 and a pair of left and right side frames 614. The head pipe 613 steerably supports a front fork 612 rotatably supporting a front wheel WF. The side frames 614 are joined at front ends thereof to the head pipe 613. The side frame 614 integrally includes a down frame portion 614a, a lower frame portion 614b, an uprise frame portion 614c, and a seat rail portion 614d and is formed of a single pipe by bending. The down frame portion 614a extends downward from the head pipe 613. The lower frame portion 614b is merged with the lower end of the down frame portion 614a and extends rearward below the floor 611 and the rear half thereof is formed to slant rearward upwardly. The uprise frame portion 614c is merged with the rear end of the lower frame portion 614b and uprises from the rearward of the floor 611. The seat rail portion 614d uprises to support an occupant seat 615 and extends rearward from the rear end of the uprise frame portion 614c.

Rear sub-frames 616 are each spanned between the rear portion of the lower frame portion 614b and the front portion of the seat rail portion 614d in the side frame 614 so as to be located below the lower frame portion 614b and rearward of the uprise frame portion 614c in the side frame 614. Pivot plates 617 are each spanned between the side frame 614 and the rear sub-frame 616.

A power unit P is up and down swingably supported via a link mechanism 618 by the pivot plates 617 provided for the body frame F. The power unit P is composed of an engine E disposed forward of a rear wheel WR and a transmission device M disposed on the left side of the rear wheel WR. The rear wheel WR is rotatably supported by the rear portion of the power unit P. The transmission device M is composed of a V-belt type continuously variable transmission (not shown) and a reduction gear train (not shown), which reduces the output power of the transmission and transmit it to the axle of the rear wheel WR.

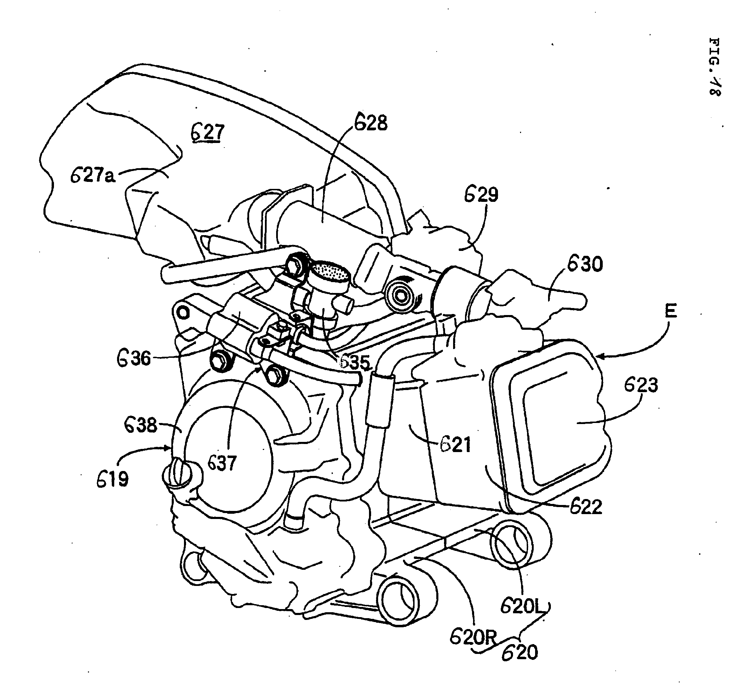

Referring to Fig. 18, an engine main body 619 of the engine E, which is a single cylinder water-cooled 4-cycle engine, includes a crankcase 620, a cylinder block 621, a cylinder head 622 and a head cover 623. The crankcase 620 is composed of left and right separate crankcase half bodies 620L, 620R which are fastened to each other. The cylinder block 621 is fastened to the crankcase 620, the cylinder head 622 is fastened to the cylinder block 621 and the head cover 623 is fastened to the cylinder head 622. The transmission device M is housed in a transmission case 625 (see Fig. 17) which is continuous to the crankcase 620 and extends along the left side of the rear wheel WR. A rear cushion unit 624 is spanned between the rear portion of the transmission case 625 and the rear portion of the left seat rail portion 614d of the seat rail portions 614d of the body frame F.

An air cleaner 627 is disposed on and supported by the transmission case 625. The upstream end of an inlet pipe 628 is connected to the air cleaner 627. A throttle body 629 is provided between the downstream end of the inlet pipe 628 and the cylinder head 622. A fuel injection valve 630 is attached to the cylinder head 622. The fuel injection valve 630 injects fuel into air passing through the throttle body 629.

The air purified by the air cleaner 627 is fed to exhaust port (not shown) of the cylinder head 622 through a secondary air control valve 635. The secondary air control valve 635 and the ignition coil 636 are together supported by a stay 637 elastically supported by a right-hand cover 638 joined to the right side surface of the crankcase 620 of the engine main body 619.

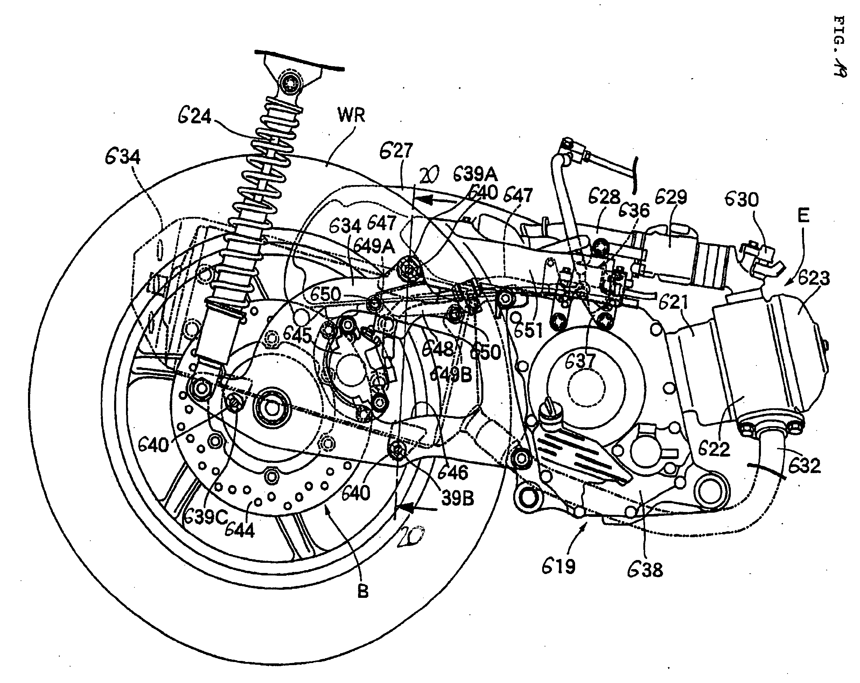

Referring additionally to Fig. 19, the upstream end of the exhaust pipe 632 is connected to the lower side surface of the cylinder head 622. The exhaust pipe 632 extends from the right-hand lower portion of the engine main body 619 to the right side of the rear wheel WR. The exhaust muffler 633 disposed on the right side of the rear wheel WR is connected to the downstream end of the exhaust pipe 632.

The transmission case 625 of the power unit P and the swing arm 634 are secured to the crankcase 620 of the engine main body 619 of the engine E. The swing arm 634 rotatably supports the rear wheel WR and is disposed on the side of the exhaust muffler 633. In this embodiment, the swing arm 634 is disposed between the rear wheel WR and the exhaust muffler 633.

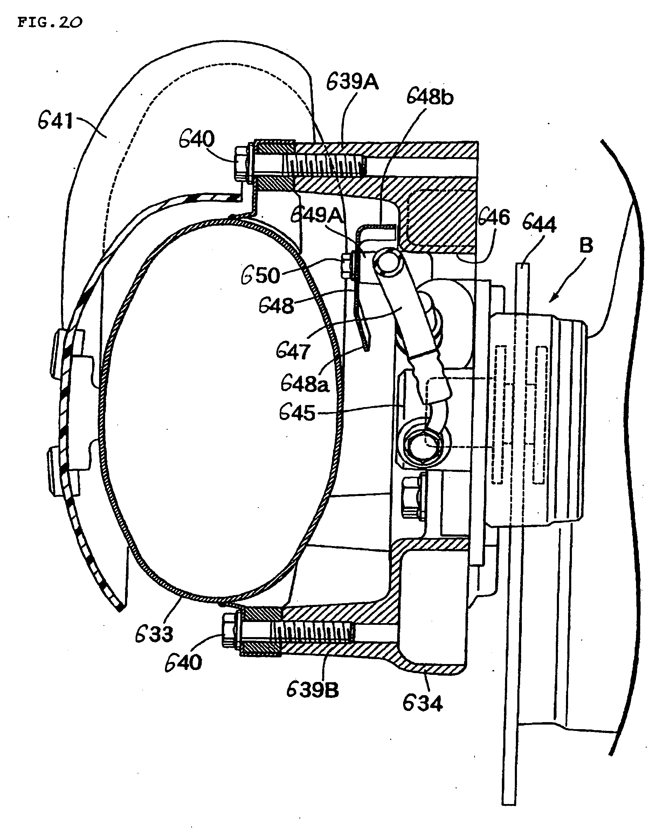

Referring additionally to Fig. 20, the swing arm 634 is integrally formed with a plurality of, e.g. three, support bosses 639A, 639B, 639C projecting from the outer surface thereof. The exhaust muffler 633 is fixedly supported by the support bosses 639A to 639C with bolts 640. In addition, a heat shield cover 641 is attached to the exhaust muffler 633 so as to cover it from the outside.

A hydraulic rear wheel brake B is attached to the rear wheel WR. The rear wheel brake B includes a brake disk 644 rotating together with the rear wheel WR; and a caliper body 645 disposed in an opening portion 646 provided in the swing arm 634 so as to stride the brake disk 644.

A brake hose 647 connected to the caliper body 642 extends forward along the swing arm 634. A protection member 648 covers a portion of the brake hose 647 that overlaps the exhaust muffler 633 at least as viewed from the lateral side. The protection member 648 is supported by the swing arm 634.

The brake hose 647 extends below the support boss 639A, among the three support bosses 639A-639C projectingly provided on the swing arm 634, projectingly provided at an upper portion of the back-and-forth-directional intermediate portion of the swing arm 634 and is connected to the caliper body 645. The protection member 648 is attached to the swing arm 634 so as to cover the brake hose 647 below the support boss 639A.

In this way, the protection member 648 is attached to at least a pair of attachment boss portions which are projectingly provided so as to face the upper and lower external side surfaces, respectively, of the brake hose 634. In the embodiment, the protection member 648 is attached to attachment boss portions 649A, 649B with bolts 650. The attachment boss portion 649A is projectingly provided on the swing arm 634 so as to face the upper external side surface of the brake hose 634. The attachment boss portion 649B is projectingly provided on the swing arm 634 at a position forward of the attachment boss portion 649A so as to face the lower external side surface of the brake hose 634.

The brake hose 647 is arranged to extend along the external surface of the swing arm 634. In addition, the brake hose 647 bends toward the body-widthwise central side in the opening portion 646 of the swing arm 634 so as to connect with the caliper body 642. The lower portion of the protection member 648 bends to extend along the curvature of the brake hose 647. More specifically, the protection member 648 is integrally formed with a bent portion 648a at its lower portion which bends inwardly to extend along the curvature of the brake hose 647. In addition, the protection member 648 is integrally formed with an upper edge bent portion 648b at its upper portion so as to be interposed between the support boss 639A and the brake hose 647.

Referring clearly to Fig. 19, the ignition coil 636 supported by the stay 637 is covered by the cover member 651. The rear portion of the cover member 651 is fastened to a protruding portion 627a of the air cleaner 627 which protrudes forward of the rear wheel WR. In addition, the front portion of the cover member 651 is fastened to the stay 637 attached to the engine main body 619.

A portion of the brake hose 647 which extends forward of the swing arm 634 toward the engine main body 619 is covered by the cover member 651.

A description is next made of the function of the embodiment. A portion of the brake hose 647 that overlaps the exhaust muffler 633 disposed on the side of the swing arm 634 at least as viewed from the lateral side is covered by the protection member 648 supported by the swing arm 634. The brake hose 647 is connected to the rear wheel brake B attached to the rear wheel WR and extending forward along the swing arm 634. It is possible to prevent the thermal influence of the exhaust muffler 633 on the brake hose 647 while disposing the brake hose 647 close to the exhaust muffler 633. Thus, the increased width of the vehicle including the exhaust muffler 633 can be prevented while avoiding lowering the flexibility of the layout of the motorcycle.

The rear wheel brake B includes the brake disk 644 rotating together with the rear wheel WR and the caliper body 645 which is disposed in the opening portion 646 provided in the swing arm 634 so as to stride the brake disk 644. While the brake hose 647 arranged to extend along the exterior surface of the swing arm 634 bends toward the vehicle body-widthwise central side so as to connect with the caliper body 645, the protection member 648 bends along the curvature of the brake hose 647. Thus, it is possible to reduce the thermal influence of the exhaust muffler 633 on the brake hose 647 not only from the side but also from the lower side thereof.

The brake hose 647 is arranged to extend below the support boss 639A which is provided to project from the external surface of the swing arm 634 for supporting the exhaust muffler 633. In addition, the protection member 648 is provided with the upper edge bent portion 648b interposed between the brake hose 647 and the support boss 639A. Thus, the brake hose 647 can be protected by the upper edge bent portion 648b from scatters from above and from heat transmitted from the exhaust muffler 633 to the support boss 639A which is provided to project from the external surface of the swing arm 634 at a position above the brake hose 647 in such a manner as to support the exhaust muffler 633.

The protection member 648 is attached to at least the pair of attachment bosses 649A and 649B which are provided on the swing arm 634 to project and face the upper and lower external side surfaces, respectively, of the brake hose 647. Thus, at the time of assembly or maintenance, the movement of the brake hose 647 can be restricted by at least the pair of attachment boss portions 649A, 649B, thereby enhancing working efficiency.

The swing arm 634 is secured to the engine main body 619 of the engine E swingably supported by the body frame F. A portion of the brake hose 647 that extends forward of the swing arm 634 toward the engine main body 619 is covered by the cover member 651 supported by the engine main body 619. Thus, the brake hose 647 can be protected by the cover member 651 while it is not exposed to the outside on the side of the engine main body 619, which makes the brake hose 647 inconspicuous, not deteriorating external appearance.

While the embodiment of the present invention has been described thus far, the invention is not limited to the embodiment and can be modified or altered in various ways not departing from the invention recited in what is claimed is.

For instance, the embodiment is described in which the brake hose 647 is connected to the rear wheel brake B; however, the present invention is applicable to a motorcycle in which a cable adapted to transmit a brake operation force to a rear wheel brake is connected to the rear wheel brake.

### Description of Reference Symbols

- 10: Scooter type vehicle
- 13: Head pipe
- 15: Front fork
- 17: Front vehicle-wheel
- 21: Handlebar
- 22: Brake lever
- 42: Rear vehicle-wheel
- 101: Front cover
- 201: Master cylinder
- 202: ABS modulator
- 203: Caliper for front vehicle-wheel
- 204: Front vehicle-wheel speed sensor rotor
- 205: Front vehicle-wheel speed sensor
- 210, 211: Brake hose
- 212, 312: Signal line
- 303: Caliper for rear vehicle-wheel
- 304: Rear vehicle-wheel speed sensor rotor
- 305: Rear vehicle-wheel speed sensor
- 311: Brake hose
- 400: Front wheel
- 401: Tire
- 402: Wheel hub
- 404: Brake disk
- 411: Spoke
- 412: Normal line
- 413: Rotation direction
- 420: Attachment boss
- 421: Thread hole
- 430: Reinforcing rib
- 431: Concave portion
- 440: Projection
- 441: Thread hole
- 500: Rear wheel
- 501: Rear axle
- 502: Wheel hub
- 511: Spoke
- 513: Rotation direction
- 530: Vehicle-wheel speed sensor rotor attachment portion
- 531: Thread hole
- 541: Thread hole
- 619: Engine main body
- 633: Exhaust muffler
- 634: Swing arm
- 639A: Support boss
- 644: Brake disk
- 645: Caliper body
- 646: Opening portion
- 647: Brake hose
- 648: Opening member
- 648b: Upper edge bent portion
- 649A, 649B: Attachment boss portion
- 651: Cover member
- B: Rear wheel brake
- E: Engine
- F: Body frame
- WR: Rear wheel
- M: Continuously variable transmission
- X: Specified spoke
- Y: Proximal portion
- Z: Distal portion

## Claims

1. A vehicle-wheel speed sensor attachment structure for a motorcycle, comprising:
a wheel (400) including a wheel hub (402) and a plurality of spokes (411) radially extending from the wheel hub (402);
a brake disk (404) attached to the wheel (400); and
a vehicle-wheel speed sensor rotor (204) attached to the wheel (400) to rotate together therewith to cause a vehicle-wheel speed sensor (205) attached to a vehicle body side to detect a wheel speed;
wherein the spokes (411) are each formed with an attachment boss (420) attached to the brake disk (404) and with a reinforcing rib (430) connecting the attachment boss (420) and the wheel hub (402) and the vehicle-wheel speed sensor rotor (204) is attached to the reinforcing rib (430), and
wherein the reinforcing rib (430) has a projection height slightly lower than the height of the attachment boss (420).

2. The vehicle-wheel speed sensor attachment structure for a motorcycle according to claim 1, wherein the spoke (411) is formed with a concave portion substantially extending along the reinforcing rib (430), on a side opposite with the reinforcing rib (430).

3. The vehicle-wheel speed sensor attachment structure for a motorcycle according to claim 1 or 2, wherein the reinforcing rib (430) is formed to have such an angle that the reinforcing rib (430) crosses a line which radially extends so as to join the attachment boss (420) and the wheel hub (402).

4. The vehicle-wheel speed sensor attachment structure for a motorcycle according to claim 1, 2 or 3, wherein the reinforcing rib (430) bends oppositely to a rotation direction of the wheel (400) during traveling as the reinforcing rib (430) extends from the wheel hub (402) to the attachment boss (420).

5. The vehicle-wheel speed sensor attachment structure for a motorcycle according to claim 2, 3 or 4, wherein a projection continuous with the spoke (411) is provided at a position which is located on the outer surface of the wheel hub (402) on a side opposite with the reinforcing rib (420) and which is joined to the spoke (411).

6. A motorcycle having the vehicle-wheel speed sensor attachment structure according to one of the claims 1 to 5, said motorcycle further comprising:
a swing arm (634) swingably supporting a rear wheel (WR) relative to a body frame (F);
an exhaust muffler (633) disposed on a lateral side of the swing arm (634);
a rear wheel brake (B) attached to the rear wheel (WR) ; and
a cable or brake hose (647) connected to the rear wheel brake (B) and expending forwardly along the swing arm (634);
wherein a protection member (648) which covers a portion, of the cable or brake hose (647), overlapping the exhaust muffler (633) at least as viewed from the lateral side is supported by the swing arm (634).

7. The motorcycle according to claim 6, wherein:
the rear wheel brake (B) includes a brake disk (644) rotating together with the rear wheel (WR) and a caliper body (645) which is disposed in an opening portion (646) provided in the swing arm (634) so as to stride the brake disk (644);
the cable or brake hose (647) arranged to extend along the external surface of the swing arm (634) is curved toward a vehicle-body-widthwise central side so as to connect with the caliper body (645); and
the protection member (648) is bent so as to extend along the curvature of the cable or brake hose (647).

8. The motorcycle according to claim 6 or 7, wherein:
the swing arm (634) is projectingly provided at an external surface thereof with a support boss (639A) adapted to support the exhaust muffler (633); and
the protection member (648) is provided with an upper edge bent portion (648b) interposed between the support boss (639A) and the cable or brake hose (647) arranged to extend below the support boss (639A).

9. The motorcycle according to claim 6, 7 or 8, wherein the protection member (648) is attached to at least one pair of attachment boss portions (649A, 649B) provided on the swing arm (634) so as to project therefrom, the attachment boss portions (649A and 649B) facing upper and lower external surfaces, respectively, of the brake hose (634).

10. The motorcycle according to any one of claims 6 to 9, wherein the swing arm (634) is secured to an engine main body (619) of an engine (E) swingably supported by the body frame (F) and a portion of the cable or brake hose (647) which extends forward of the swing arm (634) toward the engine main body (619) is covered by a cover member (651) supported by the engine main body (619).

## Patentansprüche

1. Fahrzeugradgeschwindigkeitssensor-Befestigungsstruktur für ein Motorrad, die aufweist:
ein Rad (400) einschließlich einer Radnabe (402) und mehrerer Speichen (411), die sich radial von der Radnabe (402) erstrecken;
eine an dem Rad (400) befestigte Bremsscheibe (404); und
einen Fahrzeugradgeschwindigkeits-Sensorrotor (204), der an dem Rad (400) befestigt ist, um sich zusammen mit diesem zu drehen, um zu bewirken, dass ein an einer Fahrzeugkarosserieseite befestigter
Fahrzeugradgeschwindigkeitssensor (205) eine Radgeschwindigkeit erfasst;
wobei die Speichen (411) jeweils mit einem Befestigungsansatz (420), der an der Bremsscheibe (404) angebracht ist, und mit einer Verstärkungsrippe (430),
die den Befestigungsansatz (420) und die Radnabe (402) verbindet, ausgebildet sind, und wobei der Fahrzeugradgeschwindigkeits-Sensorrotor (204) an der Verstärkungsrippe (430) befestigt ist, und
wobei die Verstärkungsrippe (430) eine Vorsprunghöhe hat, die ein wenig niedriger als die Höhe des Befestigungsansatzes (420) ist.

2. Fahrzeugradgeschwindigkeitssensor-Befestigungsstruktur für ein Motorrad nach Anspruch 1, wobei die Speiche (411) mit einem konkaven Abschnitt ausgebildet ist, der sich im Wesentlichen auf einer zu der Verstärkungsrippe (430) entgegengesetzten Seite entlang der Verstärkungsrippe (430) erstreckt.

3. Fahrzeugradgeschwindigkeitssensor-Befestigungsstruktur für ein Motorrad nach Anspruch 1 oder 2, wobei die Verstärkungsrippe (430) derart ausgebildet ist, dass sie einen derartigen Winkel hat, dass die Verstärkungsrippe (430) eine Linie kreuzt, die sich derart radial erstreckt, dass sie den Befestigungsansatz (420) und die Radnabe (402) verbindet.

4. Fahrzeugradgeschwindigkeitssensor-Befestigungsstruktur für ein Motorrad nach Anspruch 1, 2 oder 3, wobei die Verstärkungsrippe (430) sich während des Fahrens entgegengesetzt zu einer Drehrichtung des Rads (400) krümmt, während die Verstärkungsrippe (430) sich von der Radnabe (402) zu dem Befestigungsansatz (420) erstreckt.

5. Fahrzeugradgeschwindigkeitssensor-Befestigungsstruktur für ein Motorrad nach Anspruch 2, 3 oder 4 wobei ein mit der Speiche (411) kontinuierlicher Vorsprung an einer Position bereitgestellt ist, die sich auf der Außenoberfläche der Radnabe (402) auf einer zu der Verstärkungsrippe (420) entgegengesetzten Seite befindet und die mit der Speicher (411) verbunden ist.

6. Motorrad mit der Fahrzeugradgeschwindigkeitssensor-Befestigungsstruktur nach einem der Ansprüche 1 bis 5, wobei das Motorrad ferner aufweist:
eine Schwinge (634), die ein Hinterrad (WR) relativ zu einem Karosserierahmen (F) schwenkbar hält;
einen Auspufftopf (633), der auf einer seitlichen Seite der Schwinge (634) angeordnet ist;
eine Hinterradbremse (B), die an dem Hinterrad (WR) befestigt ist; und
einen Kabel- oder Bremsschlauch (647), der mit der Hinterradbremse (B) verbunden ist und sich entlang der Schwinge (634) nach vorn erstreckt;
wobei ein Schutzelement (648), das einen Abschnitt des Kabel- oder
Bremsschlauchs (647) bedeckt, das den Auspufftopf (633) wenigstens von der seitlichen Seit gesehen überlappt, von der Schwinge (634) gehalten wird.

7. Motorrad nach Anspruch 6, wobei:
die Hinterradbremse (B) eine Bremsscheibe (644), die sich zusammen mit dem Hinterrad (WR) dreht, und einen Bremssattelkörper (645) umfasst, der in einem Öffnungsabschnitt (646) angeordnet ist, der in der Schwinge (634) bereitgestellt ist, um die Bremsscheibe (644) zu überschreiten;
der Kabel- oder Bremsschlauch (647), der angeordnet ist, um sich entlang der äußeren Oberfläche der Schwinge (634) zu erstrecken, in Richtung einer mittleren Seite in der Fahrzeugbreitenrichtung gekrümmt ist, um mit dem Bremssattelkörper (645) zu verbinden; und
das Schutzelement (648) gekrümmt ist, um sich entlang der Krümmung des Kabel- oder Bremsschlauchs (647) zu erstrecken.

8. Motorrad nach Anspruch 6 oder 7, wobei:
die Schwinge(634) an ihrer Außenoberfläche mit einem vorstehenden Halteansatz (639A) versehen ist, der geeignet ist, um den Auspufftopf (633) zu halten; und
das Schutzelement (648) mit einem gekrümmten oberen Randabschnitt (648b) versehen ist, der zwischen dem Halteansatz (639A) und dem Kabel- oder
Bremsschlauch (647) eingefügt ist, der eingerichtet ist, um sich unter dem Halteansatz (639A) zu erstrecken.

9. Motorrad nach Anspruch 6, 7 oder 8, wobei das Schutzelement (648) an wenigstens einem Paar von Befestigungsansatzabschnitten (649A, 649B) befestigt ist, die auf der Schwinge (634) bereitgestellt sind, um von dieser vorzustehen, wobei die Befestigungsansatzabschnitte (649A und 649B) jeweils oberen und unteren Außenoberflächen des Bremsschlauchs (634) zugewandt sind.

10. Motorrad nach einem der Ansprüche 6 bis 9, wobei die Schwinge (634) an einem Motorhauptkörper (619) eines Motors (E) befestigt ist, der von dem Karosserierahmen (F) schwenkbar gehalten wird, und ein Abschnitt des Kabel- oder Bremsschlauchs (647), der sich von der Schwinge (634) nach vom in Richtung des Motorhauptkörpers (619) erstreckt, von einem Abdeckelement (651) bedeckt wird, das von dem Motorhauptkörper (619) gehalten wird.

## Revendications

1. Structure de fixation de capteur de vitesse de roue de véhicule pour un motocycle, comprenant :
une roue (400) incluant un moyeu de roue (402) et une pluralité de rayons (411) s'étendant radialement à partir du moyeu de roue (402) ;
un disque de frein (404) fixé à la roue (400) ; et
un rotor de capteur de vitesse de roue de véhicule (204) fixé à la roue (400) pour tourner avec celle-ci afin d'amener un capteur de vitesse de roue de véhicule (205) fixé à un côté de corps de véhicule à détecter une vitesse de roue ;
dans laquelle les rayons (411) comportent individuellement un bossage de fixation (420) fixé au disque de frein (404) et d'une nervure de renforcement (430) raccordant le bossage de fixation (420) et le moyeu de roue (402) et le rotor de capteur de vitesse de roue de véhicule (204) est fixé à la nervure de renforcement (430), et
dans laquelle la nervure de renforcement (430) présente une hauteur de saillie légèrement plus basse que la hauteur du bossage de fixation (420).

2. Structure de fixation de capteur de vitesse de roue de véhicule pour un motocycle selon la revendication 1, dans laquelle le rayon (411) comporte une portion concave s'étendant sensiblement le long de la nervure de renforcement (403), d'un côté opposé à la nervure de renforcement (430).

3. Structure de fixation de capteur de vitesse de roue de véhicule pour un motocycle selon la revendication 1 ou 2, dans laquelle la nervure de renforcement (430) est formée pour avoir un angle tel que la nervure de renforcement (430) coupe une droite qui s'étend radialement de façon à relier le bossage de fixation (420) et le moyeu de roue (402).

4. Structure de fixation de capteur de vitesse de roue de véhicule pour un motocycle selon la revendication 1, 2 ou 3, dans laquelle la nervure de renforcement (430) fléchit à l'opposé d'un sens de rotation de roue (400) pendant le déplacement alors que la nervure de renforcement (430) s'étend du moyeu de roue (402) au bossage de fixation (420).

5. Structure de fixation de capteur de vitesse de roue de véhicule pour un motocycle selon la revendication 2, 3 ou 4, dans laquelle une saillie continue avec le rayon (411) est prévue à une position qui est située sur la surface externe du moyeu de roue (402) d'un côté opposé à la nervure de renforcement (430) et qui est reliée au rayon (411).

6. Motocycle ayant la structure de fixation de capteur de vitesse de roue de véhicule selon l'une quelconque des revendications 1 à 5, ledit motocycle comprenant en outre :
un bras oscillant (634) supportant avec faculté d'oscillation une roue arrière (WR) par rapport à un châssis (F) ;
un pot d'échappement (633) disposé sur un côté latéral du bras oscillant (634) ;
un frein de roue arrière (B) fixé à la roue arrière (WR) ; et
un câble ou flexible de frein (647) raccordé au frein de roue arrière (B) et s'étendant vers l'avant le long du bras oscillant (634) ;
où un organe de protection (648) qui couvre une portion, du câble ou flexible de frein (647), chevauchant le pot d'échappement (633), au moins tel qu'on le voit du côté latéral, est supporté par le bras oscillant (634).

7. Motocycle selon la revendication 6, dans lequel :
le frein de roue arrière (B) inclut un disque de frein (644) tournant avec la roue arrière (WR) et un corps d'étrier (645) qui est disposé dans une portion d'ouverture (646) prévue dans le bras oscillant (634) de façon à enjamber le disque de frein (644) ;
le câble ou flexible de frein (647) agencé pour s'étendre le long de la surface externe du bras oscillant (634) est incurvé vers un côté central dans le sens de largeur de carrosserie de véhicule de façon à se raccorder au corps d'étrier (645) ; et
l'organe de protection (648) est fléchi de façon à s'étendre le long de la courbure du câble ou flexible de frein (347).

8. Motocycle selon la revendication 6 ou 7, dans lequel :
le bras oscillant (634) est muni en saillie au niveau d'une surface externe de celui-ci d'un bossage de support (639A) adapté pour supporter le pot d'échappement (633) ; et
l'organe de protection (648) est muni d'une portion fléchie de bord supérieur (648b) interposée entre le bossage de support (639A) et le câble ou flexible de frein (647) agencé pour s'étendre sous le bossage de support (639A).

9. Motocycle selon la revendication 6, 7 ou 8, dans lequel l'organe de protection (648) est fixé à au moins une paire de portions de bossages de fixation (649A, 649B) prévues sur le bras oscillant (634) de façon à en dépasser, les portions de bossages de fixation (649A et 649B) étant tournées vers des surfaces externes supérieure et inférieure, respectivement, du flexible de frein (634).

10. Motocycle selon l'une quelconque des revendications 6 à 9, dans lequel le bras oscillant (634) est fixé à un corps principal de moteur (619) d'un moteur (E) supporté avec faculté d'oscillation par le châssis (F) et une portion du câble ou flexible de frein (647) qui s'étend vers l'avant du bras oscillant (634) vers le corps principal de moteur (619) est couverte par un organe de couverture (651) supporté par le corps principal de moteur (619).
